# EUROPÄISCHE PATENTANMELDUNG

(11) **EP 0 525 233 A1**
(43) Veröffentlichungstag der Anmeldung: **03.02.1993**
(21) Anmeldenummer: 91112826.2
(22) Anmeldetag: 30.07.1991
(51) Int. Cl.: G06F 13/28

(54) **Verfahren und Schaltungsanordnung für den Datenaustausch zwischen einer Leitungs- und einer Speicherseite durch direkte Speicherzugriffsübertragung**

(71) Anmelder: Siemens Nixdorf Informationssysteme Aktiengesellschaft, D-33102 Paderborn (DE)
(72) Erfinder: Robert, Karl-Heinz, Dipl.-Ing. FH, W-8023 Pullach (DE)
(74) Vertreter: Fuchs, Franz-Josef, Dr.-Ing.

(57) **Zusammenfassung**

Der Datenaustausch zwischen einer Speicher-und einer Leitungsseite erfolgt dadurch, daß der Datenaustausch auf jeder der beiden Seiten für sich gesteuert und die Verbindung zwischen den beiden Seiten in Abhängigkeit eines Quittungsbetriebes über Zwischenspeichern der zu übertragenden Daten durch die Steuerung der einen Seite und Auslesen der zwischengespeicherten Daten durch die Steuerung der anderen Seite hergestellt wird. Nach einem zu einem Gesamtvorgang gehörenden einzelnen Datenaustauschvorgang wird zur Weiterführung an fortsetzungsrichtiger Stelle des betreffenden Gesamtvorganges eine entsprechende Statusinformation abgespeichert. Während eines Datenaustauschvorganges können die jeweils übertragenen Daten bezüglich einer vorgegebenen Datenbeginngrenze ausgerichtet und desweiteren an unterschiedliche Datenpfadbreiten zwischen den beiden Seiten angepaßt werden.

## Beschreibung

Die Erfindung betrifft ein Verfahren und eine Schaltungsanordnung für den Datenaustausch zwischen einer Leitungs- und einer Speicherseite durch direkte Speicherzugriffsübertragung gemäß dem Oberbegriff der Ansprüche 1 und 6.

In Hochleistungsdatenverarbeitungssystemen kommunizieren heute auf einer Leitungsseite angeordnet eine Vielzahl von zum System gehörender Geräte mit einem auf einer Speicherseite angeordneten Datenspeicher, wobei der Datenspeicher im direkten Speicherzugriffsmodus arbeitet. Zur Steuerung von Ein-/Ausgangsvorgängen im direkten Speicherzugriffsmodus werden spezialisierte Ein/Ausgabeeinheiten verwendet, nämlich sogenannte DMA-Controller. Die durch einen DMA-Controller gesteuerte elektronische Verbindung zwischen einem Gerät auf der Leitungsseite und dem Datenspeicher auf der Speicherseite des Systems stellt dabei einen Datenkanal dar. Bei der Vielzahl von Geräten, die mit dem Datenspeicher kommunizieren, sind entsprechend viele Datenkanäle zu steuern. Dabei kommt es für die Bedienung des einen oder anderen Datenkanals häufig zu Wartezeiten, weil der gerade bediente Datenkanal noch fertig bedient werden muß. Um möglichst keine Wartezeiten entstehen zu lassen, werden mehrere DMA-Controller eingesetzt, in der Hoffnung, daß wenigstens ein DMA-Controller bei einer Datenkanalanforderung frei ist. Die Folge davon ist aber, daß der Hardware-Aufwand für das System dementsprechend groß ist.

Aufgabe der Erfindung ist es nun, ein Verfahren und eine Schaltungsanorndung der eingangs genannten Art anzugeben, durch die eine große Anzahl von DMA-Kanälen mit einem Minimum an Hardware-Aufwand realisiert werden kann.

Diese Aufgabe wird erfindungsgemäß für das Verfahren durch die kennzeichnenden Merkmale des Anspruchs 1 und für die Schaltungsanordnung durch die kennzeichnenden Merkmale des Anspruchs 6 gelöst. Danach steht einem DMA-Controller sowohl für die Leitungs- als auch für die Speicherseite ein eigenes Steuerwerk zur Verfügung, die voneinander unabhängig arbeiten. Jedes Steuerwerk führt für seine Seite den Datentransport von und zu einem Wechselspeicher durch, der als Bindeglied zwischen den beiden Seiten dient. Die von der einen zur anderen Seite zu übertragenden Daten werden jeweils von dem Steuerwerk der einen Seite im Wechselspeicher zwischengespeichert und von dem Steuerwerk der jeweils anderen Seite ausgelesen und weitertransportiert. Der Vorteil dabei ist, daß die Steuerwerke nicht aufeinander warten müssen sondern jeweils einen anderen Datenkanal bearbeiten können. Hierdurch wird nicht nur die Systemleistung positiv beeinflußt, weil eben die Wartezeiten wegfallen, sondern auch der Hardware-Aufwand minimiert, weil ein derartiger DMA-Controller mehrere DMA-Kanäle gleichzeitig bearbeiten kann. Die zeitliche Abstimmung der Steuerwerke untereinander wird durch einen Quittungsbetrieb zwischen den beiden Steuerwerken bewerkstelligt. Hierzu dienen eine Kanalauswahl-, eine Quittungssignalübergabe- und eine Steuerinformationsübergabeschaltung.

Die einzelnen DMA-Kanäle werden in einem Zeitscheibenverfahren angewählt und bearbeitet. Hierzu wird beim Übergang von der Bearbeitung des einen zum anderen Kanal der aktuelle Status der Steuerwerke in einem jeweils eigenen Statusspeicher hinterlegt bzw. aus ihm in das zugehörige Steuerwerk geladen. Die Anzahl der DMA-Kanäle ist somit nur von der Kapazität der Statusspeicher abhängig.

Vorteilhafte Ausgestaltungen der Erfindung sind Gegenstand von Unteransprüchen.

Mit der Kanalauswahlschaltung können die einzelnen DMA-Kanäle in beliebiger Reihenfolge oder nach einem festen, sich wiederholenden Schema ausgewählt werden. Ersteres ermöglicht eine besonders schnelle Bearbeitung der einzelnen DMA-Kanäle. Letzteres vereinfacht die Hardware zusätzlich.

Die Zwischenspeicherung der zu übertragenden Daten ermöglicht einen Betrieb, in dem bei einem Datenaustauschvorgang gegenüber einer Einzeldatenübertragung gleich ein Datenstoß übertragen wird.

In weiteren Ausgestaltungen der Erfindung können die zu übertragenden Daten gleichzeitig mit dem Übertragungsschritt bezüglich einer Datenbeginngrenze ausgerichtet werden, indem die Daten aus dem Wechselspeicher in entsprechend versetzter bzw. schräglesender Weise aus dem Wechselspeicher herausgelesen werden. Eine Verdoppelung der Datenspeicherzugriffe oder eine Umkopierung der Daten zu diesem Zweck erübrigt sich dadurch.

Desweiteren kann gleich mit einem Datenübertragungsschritt die Datenbreite der zu übertragenden Daten auf die jeweilige Datenpfadbreite der Leitungs- bzw. Speicherseite angepaßt werden, so daß auch hierfür keine Zeit für die Zusammenstellung einzelner Datenteile verloren geht.

Die Erfindung wird nachstehend anhand der in der Zeichnung dargestellten Ausführungsform näher erläutert. Es zeigen
FIG 1 ein Blockschaltbild einer Schaltungsanordnung für den Datenaustausch zwischen einer Leitungs- und einer Speicherseite durch direkte Speicherzugriffsübertragung gemäß der Erfindung,
FIG 2 eine Prinzipschaltung einer in FIG 1 verwendeten Steuerinformationsübergabeschaltung,
FIG 3 eine Prinzipschaltung einer in FIG 1 verwendeten Einrichtung zum Ausrichten der zu übertragenden Daten bezüglich einer Datenbeginngrenze und
FIG 4 eine Prinzipschaltung einer in FIG 1 verwendeten Einrichtung zum Angleichen der Datenbreite der zu übertragenden Daten auf die jeweilige Datenpfadbreite der betreffenden Zielseite bei einem Datenaustausch.

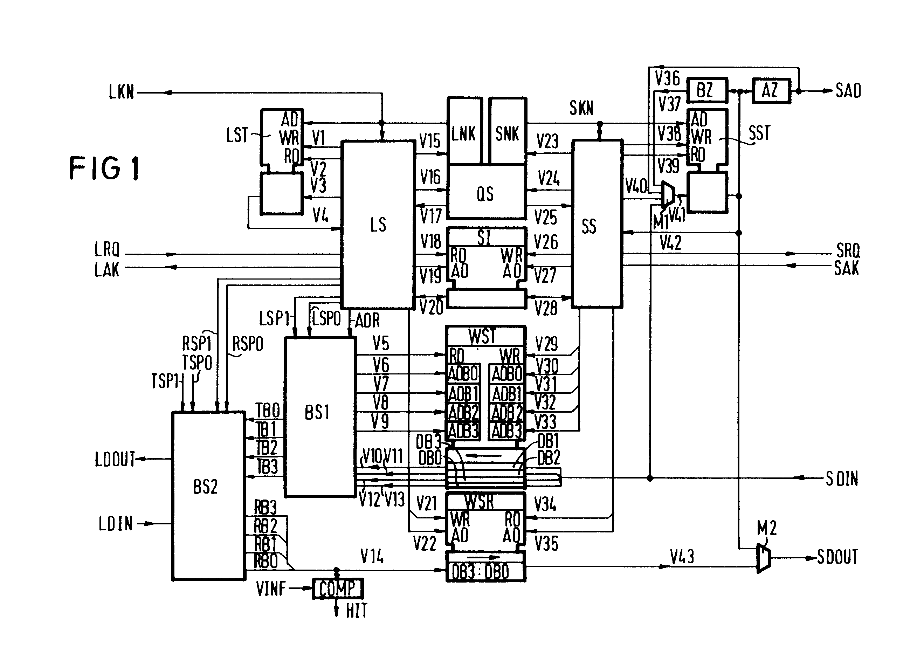

Die in der FIG 1 dargestellte Schaltungsanordnung weist eine Grundschaltung auf, die durch ein Steuerwerk LS für die Leitungsseite mit einem zugehörigen Statusspeicher LST, durch ein Steuerwerk SS für die Speicherseite mit einem zugehörigen Statusspeicher SST, durch eine Quittungseinrichtung bestehend aus einer Kanalauswahlschaltung LNK für die Leitungsseite, einer Kanalauswahlschaltung SNK für die Speicherseite, einer Quittungssignalübergabeschaltung QS und einer Steuerinformationsübergabeschaltung SI, sowie durch einen Wechselspeicher WST, WSR für zu sendende und zu empfangende Daten gebildet ist. Darüberhinaus weist die Schaltungsanordnung gemäß FIG 1 eine Datenschrägleseeinrichtung BS1, eine Datenpfadbreitenanpaßeinrichtung BS2, eine Vergleichseinrichtung COMP und für den Datenstoßbetrieb eine Zähleinrichtung bestehend aus einem Byte- und einem Adressenzähler BZ und AZ auf. Zwei Multiplexer M1 und M2 dienen als Auswahlschaltung für einzelne interne Datenwege.

Die linke Seite der FIG 1 stellt die Leitungsseite dar, über die die verschiedenen Geräte eines Datenverarbeitungssystems den Datenaustausch mit dem Datenspeicher des Systems durchführen. Die rechte Seite der FIG 1 stellt die Speicherseite dar, an der der Datenspeicher angeschlossen ist.

Die verschiedenen Geräte des Systems werden über elektronische Datenkanäle mit dem Datenspeicher einzeln verbunden. Die Auswahl eines Datenkanals erfolgt über die Adreßsteuerung. Eine entsprechende Adresse gibt an, welcher Datenkanal im Augenblick aktiviert wird. Die betreffende Adresse wird von den Kanalauswahlschaltungen LNK bzw. SNK ermittelt und an die jeweiligen Schaltungsteile weitergegeben. Die Adressensteuerung ist sowohl für die Leitungsseite als auch für die Speicherseite realisiert.

Die gegenüber der Grundschaltung zusätzlichen Schaltungsteile können nur teilweise realisiert sein. Beispielsweise wird der Byte- und Adreßzähler BZ und AZ nur benötigt, wenn ein Datenaustausch im Datenstoßbetrieb durchgeführt werden soll. Der Bytezähler BZ zählt dabei die abgearbeiteten Datenbytes und der Adreßzähler AZ erniedrigt oder erhöht die Adresse für das nächste zu bearbeitende Byte.

In der FIG 1 ist die Zähleinrichtung nur auf der Speicherseite angeordnet, so daß an der Leitungsseite kein weiterer Speicher angeschlossen sein kann. Soll das möglich sein, wäre auch auf der Leitungsseite eine Zähleinrichtung bestehend aus einem Byte- und einem Adreßzähler vorzusehen.

Der Wechselspeicher WST, WSR ist in jede Richtung les- und beschreibbar. Für die Leitungsseite ist der mit WST bezeichnete Teil les- und der mit WSR bezeichnete Teil beschreibbar. Für die Speicherseite ist der mit WST bezeichnete Teil beschreib- und der mit WSR bezeichnete Teil lesbar.

Die Schaltungsanordnung gemäß FIG 1 ist so ausgelegt, daß die Datenpfadbreite auf der Speicherseite 4 Datenbytes beträgt. Die Datenpfadbreite auf der Leitungsseite kann unterschiedlich sein. Für das Ausführungsbeispiel wird angenommen, daß die Datenpfadbreite auf der Leitungsseite entweder 1, 2 oder 4 Datenbytes breit ist. Ein 3 Datenbytes breiter Datenpfad ist aus datenverarbeitungstechnischen Gründen nicht sinnvoll. Dadurch, daß auf der Speicherseite stets vier Datenbytes übertragen werden, weist der Wechselspeicher WST, WSR eine Speicherbreite von vier Bytes auf. Der mit WSR bezeichnete Teil des Wechselspeichers WST, WSR ist gegenüber dem mit WST bezeichneten Teil nur vereinfacht gezeichnet.

Der Statusspeicher LST und das Steuerwerk LS sind über die Verbindungen V1, V2, V3 und V4 miteinander verbunden. Die Verbindung V1 dient zur Übergabe eines Schreibsignals und die Verbindung V2 zur Übergabe eines Lesesignals des Leitungssteuerwerks LS an den Statusspeicher LST. Über die Verbindung V3 wird der Statusspeicher LST vom Leitungssteuerwerk LS beschrieben und über die Verbindung V4 wieder ausgelesen. Über die Verbindung V15 trifft das Leitungssteuerwerk LS eine Datenkanalauswahl.

Die für die Leitungsseite im Augenblick gültige Kanaladresse wird über die Leitung LKN dem Leitungssteuerwerk LS, dem zugehörigen Statusspeicher LST und einer übergeordneten Steuereinheit auf der Leitungsseite angezeigt. Die Verbindungen V16 und V17 dienen zur Übergabe von Quittungssignalen zwischen der Quittungssignalübergabeschaltung QS und dem Leitungssteuerwerk LS. Die Quittungssignalübergabeschaltung QS kann als Flip-Flop-Schaltung realisiert sein.

Über die Verbindung V18 wird ein Lesesignal seitens des Leitungssteuerwerks LS an die Steuerinformationsübergabeschaltung SI gesendet. Die Verbindung V19 dient dabei zur Mitteilung an die Steuerinformationsübergabeschaltung SI, zu welchem Datenkanal die Steuerinformation gelesen werden soll. Über die Verbindung V20 wird die angeforderte Steuerinformation vom Leitungssteuerwerk LS dann gelesen.

Auf der Speicherseite entsprechen den eben erwähnten Verbindungen V1, V2, V3 und V4 sowie V15, V16, V17, V18, V19 und V20 analog die Verbindungen V38, V39, V40, V41 und V42 sowie V23, V24, V25, V26, V27 und V28. Darüberhinaus entspricht die Leitung SKN analog der Leitung LKN. Das Schreiben des Statusspeichers SST auf der Speicherseite erfolgt gemäß dem Ausführungsbeispiel über die Verbindungen V40 und V41, da zwischen dem Speichersteuerwerk SS und dem zugehörigen Statusspeicher SST noch der Multiplexer M1 eingefügt ist. Der Multiplexer M1 dient dazu, zusätzlich die Informationen des Bytezählers BZ und des Adressenzählers AZ im Statusspeicher SST abspeichern zu können. Die Übergabe der entsprechenden Informationen erfolgt über die Verbindungen V36 und V37. Die Information des Adreßzählers AZ wird außerdem über die Leitung SAD dem Datenspeicher zugeführt.

Über die Verbindungen V16, V17, V24 und V25 werden für den Quittungsbetrieb die Quittungssignale zwischen dem Leitungs- und dem Speichersteuerwerk LS und SS ausgetauscht.

An das Leitungssteuerwerk LS sind die Leitungen LRQ und LAK geführt. Analog dazu sind an das Speichersteuerwerk SS die Leitungen SRQ und SAK geführt. Über die Leitungen LRQ und LAK sowie über die Leitungen SRQ und SAK werden Anforderungs- und Bestätigungssignale zwischen dem Leitungssteuerwerk L5 und einer übergeordneten Steuereinheit einerseits und zwischen dem Speichersteuerwerk SS und dem Datenspeicher andererseits ausgetauscht.

Das Leitungssteuerwerk LS und das Speichersteuerwerk SS stehen mit dem Wechselspeicher WST, WSR in Verbindung. Zur Übertragung von Daten von der Speicherseite zur Leitungsseite ist das Speichersteuerwerk SS über die Verbindung V29 für ein Schreibsignal und über die Verbindung V30, V31, V32 und V33 zur Übergabe von vier Byteadressen ADBO, ADB1, ADB2 und ADB3 für ein jeweils zugehöriges Datenbyte DBO, DB1, DB2 und DB3 mit dem mit WST bezeichneten Teil des Wechselspeichers WST, WSR verbunden. Die vier Datenbytes DBO, DB1, DB2 und DB3 werden dem Wechselspeicher WST, WSR über eine speicherseitige Dateneingabeleitung SDIN zugeführt.

Zur Weiterleitung der gespeicherten Datenbytes ist der mit WST bezeichnete Teil des Wechselspeichers WST, WSR über die Verbindungen V5, V6, V7, V8 und V9 mit dem Leitungssteuerwerk LS verbunden. Über die Verbindung V5 übergibt das Leitungssteuerwerk LS ein Lesesignal RD an den Wechselspeicher WST, WSR. Über die Verbindungen V6, V7, V8 und V9 werden die zu lesenden Datenbytes DBO, DB1, DB2 und DB3 mit den Byteadressen ADBO, ADB1, ADB2 und ADB3 adressiert. Über die Verbindungen V10, V11, V12 und V13 werden dann die adressierten Datenbytes an die Leitungsseite weitergegeben.

Gemäß dem Ausführungsbeispiel werden die gelesenen Datenbytes nicht unmittelbar auf eine leitungsseitige Datenausgabeleitung LDOUT ausgegeben sondern erst einer Datenschrägleseeinrichtung BS1 und im vorliegenden Fall auch noch einer Datenpfadbreitenanpaßeinrichtung BS2 übergeben. Außerdem werden die vom Leitungssteuerwerk LS zum Lesen der Datenbytes DBO, DB1, DB2 und DB3 auf einer Adreßleitung ADR ausgegebenen Byteadressen nicht unmittelbar über die Verbindungen V6, V7, V8 und V9 dem Wechselspeicher WST, WSR sondern ebenfalls erst der Datenschrägleseeinrichtung BS1 zugeführt, wo in Abhängigkeit von Signalen auf den Leitungen LSP1 und LSP2 eine Adreßmodifikation bezüglich der zu lesenden Datenbytes durchgeführt wird. Durch die Adreßmodifikation werden die Datenbytes DBO, DB1, DB2 und DB3 an vertauschten Plätzen über die Verbindungen V10, V11, V12 und V13 ausgelesen.

Die auszulesenden Datenbytes DBO, DB1, DB2 und DB3 werden dann von der Datenschrägleseeinrichtung BS1 über die Leitungen TBO, TB1, TB2 und TB3 der Datenpfadbreitenanpaßeinrichtung BS2 zugeführt, die abhängig von Signalen auf den Leitungen TSP1 und TSPO eine Anpassung an die Datenpfadbreite der Leitungsseite durchführt.

Der mit WSR bezeichnete Teil des Wechselspeichers WST, WSR ist analog zu dem mit WST bezeichneten Teil aufgebaut und dient für den Datenaustausch von der Leitungs- zur Speicherseite. Für diesen Datenaustausch wird der Wechselspeicher WST, WSR durch das Leitungssteuerwerk LS über die Verbindung V22, auf der die Adreßsignale für die Datenbytes DBO, DB1, DB2 und DB3 analog zu den Verbindungen V30, V31, V32 und V33 übertragen werden, und die Verbindung V21, über die ein Schreibsignal übertragen wird, angesteuert. Die zunächst auf einer leitungsseitigen Dateneingabeleitung LDIN ankommenden zu speichernden Datenbytes DBO, DB1, DB2 und DB3 werden über die Datenbreitenanpaßeinrichtung BS2 und die Verbindung V14 dem Wechselspeicher WST, WSR zugeführt. Die Verbindung V14 faßt dabei einzelne von der Datenpfadbreitenanpaßeinrichtung BS2 abgehenden Verbindungen RBO, RB1, RB2 und RB3, über die jeweils eines der Datenbytes DBO, DB1, DB2 und DB3 geleitet wird, zusammen. Welche Datenbytes auf welcher der Leitungen RBO, RB1, RB2 und RB3 übertragen werden, wird durch die der Datenbreitenanpaßeinrichtung BS2 über die Leitungen RSP1 und RSP2 zugeführten Signale festgelegt. Über die Verbindungen V34 und V35 werden dann die gespeicherten Datenbytes DBO, DB1, DB2 und DB3 adressiert und über die Verbindung V43, den Multiplexer M2 und der speicherseitigen Datenausgabeleitung SBOUT zum Datenspeicher weitergeleitet.

Der Multiplexer M2 dient dazu, die vom Statusspeicher SST ausgegebenen Statusinformationen über die Verbindung V42 und der speicherseitigen Datenausgabeleitung SDOUT mit abspeichern zu können. Über die Verbindung V42 kann das Speichersteuerwerk SS die im Statusspeicher SST gespeicherten Statusinformationen zu einem Datenkanal abrufen. Die Verbindung V42 ermöglicht ferner, den Bytezähler BZ und den Adreßenzähler AZ aus dem Statusspeicher SST zu laden. Der Stand des Bytezählers BZ und der Stand des Adressenzählers AZ können über die Verbindungen V36 und V37 sowie über den Multiplexer M1 im Statusspeicher SST wieder abgelegt werden. Über die speicherseitige Dateneingabeleitung SDIN und den Multiplexer M1 können ferner im Datenspeicher gespeicherte Informationen im Statusspeicher SST abgespeichert werden.

An die Verbindung V14 ist eine Vergleichseinrichtung COMP angeschlossen, der zusätzlich über die Leitung VINF eine Vergleichsinformation zugeführt wird. Abhängig vom Ergebnis des Vergleichs der Information auf der Leitung VINF und der auf der Verbindung V14 übertragenen Datenbytes wird ein Signal erzeugt, das über die Leitung HIT an weitere Einheiten zur Auswertung und Reaktion weitergeleitet wird.

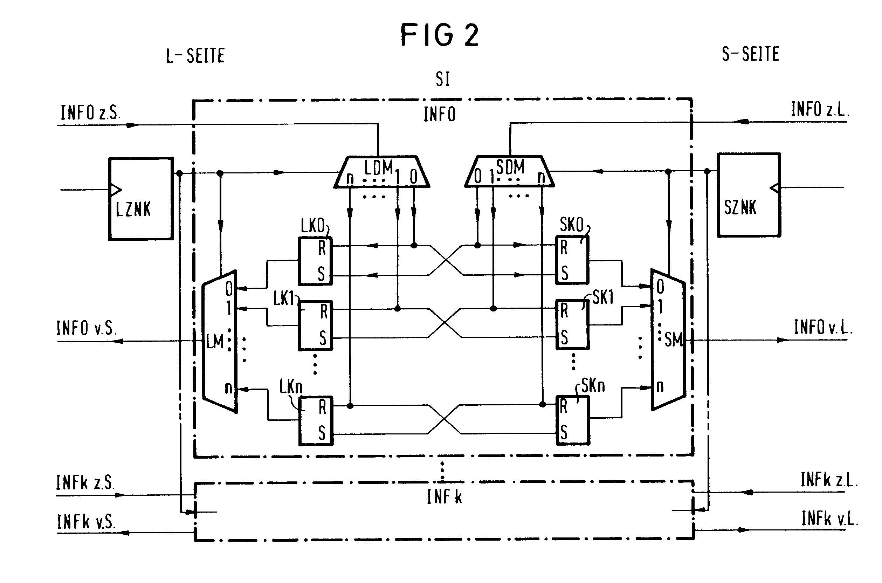

FIG 2 zeigt den prinzipiellen Aufbau der Steuerinformationsübergabeschaltung SI, mit der über k Doppelinformationsleitungen INFO z.S., INFO v.S. bzw. INFO z.L, INFO v.L bis INFk z.S, INFk v.S. bzw. INFk z.L., INFk v.L. auf der Leitungs- bzw. Speicherseite für jeden von n Datenkanälen 2^{k} Informationen von und zur Leitungsseite und von und zur Speicherseite übertragen werden können. Für jeweils eine Doppelinformationsleitungauf der Leitungs- und Speicherseite existiert eine gleiche Grundschaltung, die in der FIG 2 für die erste Doppelinformationsleitung INFO z.S., INFO v.S. und INFO z.L, INFO v.L. von und zur Speicherseite bzw. von und zur Leitungsseite ausführlicher dargestellt ist. Neben der Grundschaltung ist auf der Leitungsseite eine Leitungskanalauswahlschaltung LZNK und auf der Speicherseite eine Speicherkanalauswahlschaltung SZNK angeordnet. Die Kanalauswahlschaltungen LZNK und SZNK sind auf jeder Seite einmal vorhanden und steuern mit ihren Ausgangssignalen jeweils auch die anderen Grundschaltungen auf der jeweils zugehörigen Seite. Bei den Kanalauswahlschaltungen handelt es sich im Prinzip um Zähler, die entsprechend dem gewünschten Datenkanal eine entsprechende Zahlenkombination aussenden. Sind die Zähler programmierbar, können die Datenkanäle in einer beliebigen Reihenfolge angewählt werden.

Grundsätzlich ist es möglich, nur eine Grundschaltung zu verwenden. Die eigentliche Information muß dann in einem anderen Speicher hinterlegt werden.

Die Grundschaltung ist symmetrisch aufgebaut. Für die Leitungsseite existieren ein Multiplexer LM mit n + 1 Eingängen und einem Ausgang, ein Demultiplexer LDM mit einem Eingang und n + 1 Ausgängen sowie n + 1 RS-Speicherbausteine LKO, LK1 usw. bis LKn. Für die Speicherseite existieren ein Multiplexer SM mit n + 1 Eingängen und einem Ausgang, ein Demultiplexer SDM mit einem Eingang und n + 1 Ausgängen sowie n + 1 RS-Speicherbausteine SKO, SK1 usw. bis SKn. Bei den RS-Speicherbausteinen handelt es sich um Setz-Rücksetz-Speicherbausteine, deren Setzeingänge mit S und deren Rücksetzeingänge mit R gekennzeichnet sind.

An den Eingang des Leitungsdemultiplexers LDM ist die Informationsleitung INFO z.S., an den Ausgang des Leitungsmultiplexers LM ist die Informationsleitung INFO v.S., an den Eingang des Speichermultiplexers SDM ist die Informationsleitung INFO z.L. und an den Ausgang des Speichermultiplexers SM ist die Informationsleitung INFO v.L. angeschlossen. Die Auswahl eines Ausganges des Leitungsdemultiplexers LDM und eines Einganges des Leitungsmultiplexers LM erfolgt über die Leitungskanalauswahlschaltung LZNK. Die Auswahl eines Ausganges des Speicherdemultiplexers SDM und eines Einganges des Speichermultiplexers SM erfolgt über die Speicherkanalauswahlschaltung SZNK.

Der 0. Ausgang des Leitungsdemultiplexers LDM ist mit dem R-Eingang des 0. RS-Speicherbausteins LKO, der zugehörige 1. Ausgang ist mit dem R-Eingang des ersten RS-Speicherbausteins LK1 usw. verbunden, bis zum n. Ausgang, der mit dem R-Eingang des n. RS-Speicherbausteins LKn verbunden ist. Analog dazu ist der 0. Ausgang des Speicherdemultiplexers SDM mit dem R-Eingang des 0. RS-Speicherbausteins SKO, der zugehörige 1. Ausgang ist mit dem R-Eingang des 1. RS-Speicherbausteins SK1 usw. verbunden, bis zum n.Ausgang, der mit dem n. R-Eingang des n. RS-Speicherbausteins SKn verbunden ist. Daneben sind jeweils die R-Eingänge der zur Leitungsseite gehörenden RS-Speicherbausteine LKO bis LKn mit den S-Eingängen der jeweils gleichrangigen RS-Speicherbausteine SKO bis SKn der Speicherseite verbunden.

Zur Informationsübergabe von der Leitungsseite zur Speicherseite werden auf der Speicherseite der Grundschaltungen über die Informationsleitungen INFO z.L. bis INFk z.L. die zu einem vorgegebenen Datenkanal gehörenden k Bitstellen breiten Information in die zu dem betreffenden Datenkanal gehörenden RS-Speicherbausteine geschrieben und über die Informationsleitungen INFO v.S. bis INFk v.S. auf der Leitungsseite wieder ausgelesen. Umgekehrt wird eine zu einem vorgegebenen Datenkanal gehörende Information dadurch von der Leitungsseite zur Speicherseite übertragen, daß die k Bitstellen breiten Information auf der Leitungsseite der Grundschaltungen über die Informationsleitungen INFO z.S. bis INFk z.S. in die zum betreffenden Datenkanal gehörenden RS-Speicherbausteine geschrieben und über die Informationsleitungen INFO v.L. bis INFk v.L. wieder ausgelesen wird.

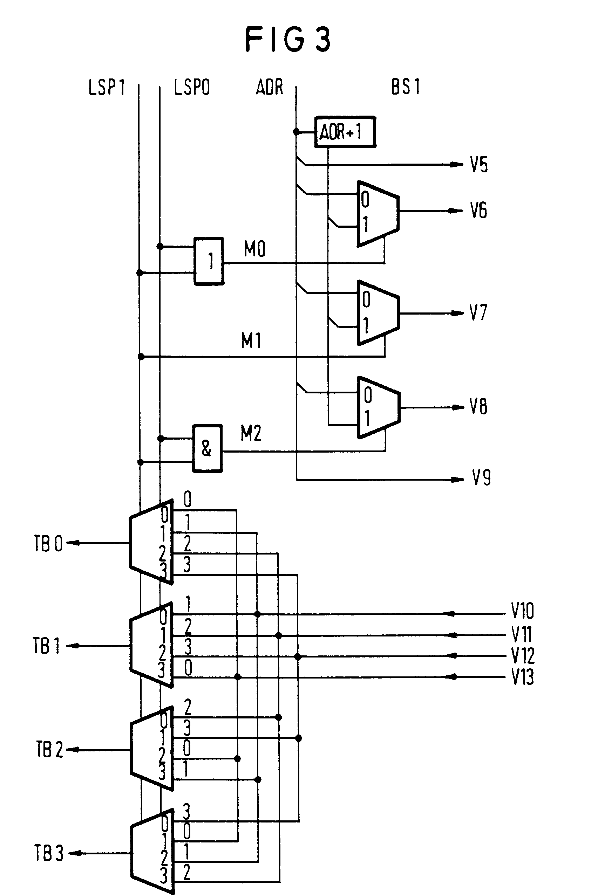

In der FIG 3 ist eine prinzipielle Schaltung der Datenschrägleseeinrichtung BS1 aus FIG 1 detaillierter dargestellt. Diese Einrichtung richtet die im Wechselspeicher WST, WSR, zwischengespeicherten Datenbytes, falls sie in einer zu einer Datenbeginngrenze unausgerichteten Weise vorliegen, die auszulesenden Daten mit dem Auslesen entsprechend der Datenbeginngrenze aus. Ausgehend davon, daß jeweils vier Datenbytes parallel übertragen werden, weist die Schaltung vier Multiplexer mit jeweils vier Eingängen und einem Ausgang auf. An den jeweiligen Ausgängen sind jeweils eine der früher schon erwähnten Leitungen TBO, TB1, TB2 und TB3 angeschlossen. Den jeweils zugehörigen Eingängen werden über die Verbindungen V10, V11, V12 und V13 die zu übertragenden Datenbytes zugeführt. Über die Verbindung V10 wird beispielsweise das Datenbyte der Wertigkeit 1, über die Verbindung V11 beispielsweise das Datenbyte der Wertigkeit 2, über die Verbindung V12 beispielsweise das Datenbyte der Wertigkeit 3 und über die Verbindung V13 beispielsweise das Datenbyte der Wertigkeit 0 zugeführt. Die Zuordnung der Verbindungen V10, V11, V12 und V13 zu den Eingängen der Multiplexer ist derart gewählt, daß an den 0. Eingang desjenigen Multiplexers, an dessen Ausgang die Leitung TBO angeschlossen ist, das Datenbyte mit der Wertigkeit 0, an den zugehörigen ersten Eingang das Datenbyte mit der Wertigkeit 1, an den zugehörigen zweiten Eingang das Datenbyte mit der Wertigkeit 2 und an den zugehörigen dritten Eingang das Datenbyte mit der Wertigkeit 3 hingeführt wird. An den 0. Eingang desjenigen Multiplexers, an dessen Ausgang die Leitung TB1 angeschlossen ist, ist das Datenbyte mit der Wertigkeit 1, an den zugehörigen ersten Eingang das Datenbyte mit der Wertigkeit 2, an den zugehörigen zweiten Eingang das Datenbyte mit der Wertigkeit 3 und an den zugehörigen dritten Eingang das Datenbyte mit der Wertigkeit 0 hingeführt. An den 0. Eingang desjenigen Multiplexers, an dessen Ausgang die Leitung TB2 angeschlossen ist, ist das Datenbyte mit der Wertigkeit 2, an den zugehörigen ersten Eingang das Datenbyte mit der Wertigkeit 3, an den zugehörigen zweiten Eingang das Datenbyte mit der Wertigkeit 0 und an den zugehörigen dritten Eingang das Datenbyte mit der Wertigkeit 1 hingeführt. Schließlich ist an den 0. Eingang desjenigen Multiplexers, an dessen Ausgang die Leitung TB3 angeschlossen ist, das Datenbyte mit der Wertigkeit 3, an den zugehörigen ersten Eingang das Datenbyte mit der Wertigkeit 0, an den zugehörigen zweiten Eingang das Datenbyte mit der Wertigkeit 1 und an den zugehörigen dritten Eingang das Datenbyte mit der Wertigkeit 2 hingeführt.

Die Multiplexer werden durch Signale auf den Leitungen LSP1 und LSPO gesteuert, wobei das Signal auf der erstgenannten Leitung das höherwertigere ist. An diesen Leitungen ist eine Decoderschaltung bestehend aus einem UND- und einem ODER-Glied und einer mit der Leitung LSP1 verbundenen direkten Anschlußleitung, auf der ein Signal M1 übertragen wird, angeschaltet. Das UND- und das ODER-Glied verknüpfen jeweils die Signale der beiden Leitungen LSP1 und LSP2. Die Ausgangsleitung des ODER-Gliedes führt ein Signal MO und die Ausgangsleitung des UND-Gliedes führt ein Signal M2. Das Signal MO weist die niedrigste und das Signal M2 die höchste Wertigkeit der drei Signale M0, M1 und M2 auf.

Jedes der Signale M0, M1 und M2 steuert einen weiteren Multiplexer, der jeweils eine Auswahl zwischen einer Datenbyteadresse und einer zugehörigen nächsthöheren Datenbyteadresse trifft. Zur Erhöhung der jeweiligen Datenbyteadressen weist die Datenschrägleseeinrichtung BS1 eine Adreßerhöhungsschaltung ADR+1 auf. Den Multiplexern und der Adreßerhöhungsschaltung ADR + 1 werden die aktuellen Datenbyteadressen über die Leitung ADR zugeführt. Gemäß dem Ausführungsbeispiel nach FIG 3 geht aus der Leitung ADR auch die Verbindung V5 hervor,die zum Lesesteuereingang des Wechselspeichers WST, WSR führt.

Wie in Verbindung mit der FIG 1 zu ersehen ist, adressiert der durch das Signal MO gesteuerte Multiplexer über die Verbindung V6 das Datenbyte DBO im Wechselspeicher WST, WSR. Der durch das Signal M1 gesteuerte Multiplexer adressiert über die Verbindung V7 das Datenbyte DB1 und der durch das Signal M2 gesteuerte Multiplexer adressiert über die Verbindung V8 das Datenbyte DB2 im Wechselspeicher WST, WSR. Das Datenbyte DB3 im Wechselspeicher WST, WSR wird direkt über die Verbindung V9 adressiert.

Gemäß früheren Aussagen ist der Wechselspeicher WST, WSR für das Ausführungsbeispiel derart organisiert, daß jeweils vier Datenbytes gleichzeitig adressiert werden. Wird die Adresse zu einem einzelnen Datenbyte durch die Adressenerhöhungsschaltung um 1 erhöht, dann bedeutet das für das Ausführungsbeispiel einen Adressensprung um vier weitere Datenbytes, was zur Folge hat, daß ein Datenbyte mit der gleichen Wertigkeit allerdings von den nächstfolgenden vier Datenbytes adressiert wird.

Zur Adressierung von Datenbytes decodiert die Decoderschaltung der Datenschrägleseeinrichtung BS1 die auf den Leitungen LSP1 und LSPO möglichen Signalkombinationen in der Weise, daß die Signalkombination LSP1 =0 und LSP0=0 in die Signalkombination M2=0, M1 =0 und M0=0 decodiert wird. Weiter wird die Signalkombination LSP1 = 0 und LSP0=1 in die Signalkombination M2=0, M1 = 0 und M0=1 decodiert. Die Signalkombination LSP1 = und LSPO = 0 wird in die Signalkombination M2 = 0 M1=1 und M0=1 und die Signalkombination LSP1 = und LSPO = 1 in die Signalkombination M2 = 1, M1 = 1 und MO = 1 decodiert. Durch diese Dekodierung wird erreicht, daß abhängig von der Datenbeginngrenze bei vier nächstauszulesenden Datenbytes gleich so verschoben ausgelesen wird, daß die Datenbeginngrenze am Anfang, also an dem über die Leitung TBO ausgelesenen Datenbyte, der tatsächlich ausgelesenen Datenbytes zu liegen kommt.

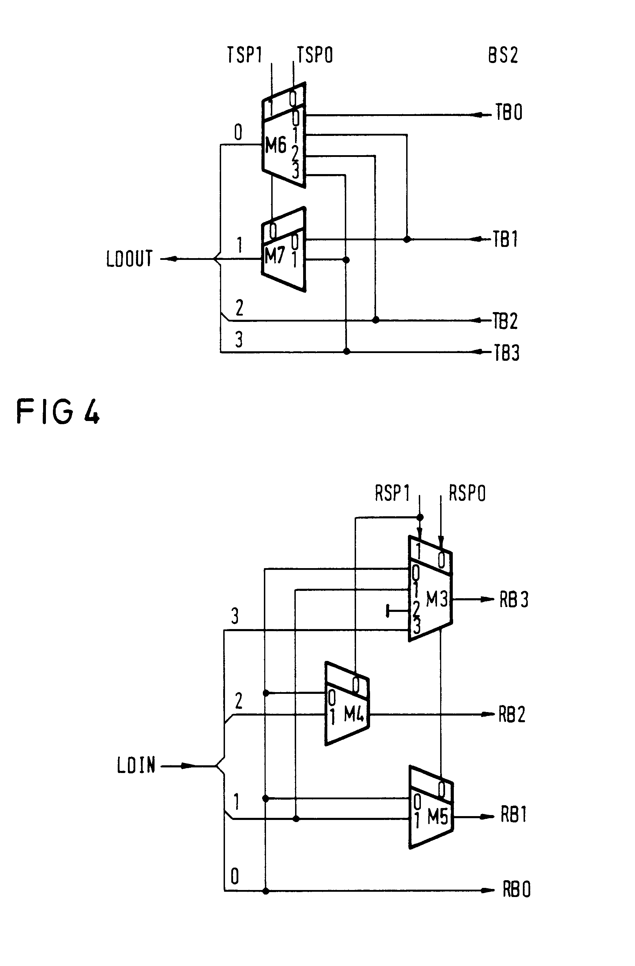

Gemäß dem Ausführungsbeispiel werden die auf den Leitungen TBO, TB1, TB2 und TB3 in Richtung Leitungsseite übertragenen Datenbytes noch einer Datenpfadbreitenanpaßeinrichtung BS2 zugeführt, die in der FIG 4 detaillierter dargestellt ist. Danach weist die Datenpfadbreitenanpaßeinrichtung BS2 für den Datenaustausch in Richtung Leitungsseite einen Multiplexer M6 mit vier Eingängen der Wertigkeit 0, 1, 2 und 3 sowie einen Multiplexer M7 mit zwei Eingängen der Wertigkeit 0 und 1 auf. Die Leitung TBO ist an den Eingang mit der Wertigkeit 0 des Multiplexers M6 geführt. Die Leitung TB1 ist an den Eingang mit der Wertigkeit 1 des Multiplexers M6 und an den Eingang mit der Wertigkeit 0 des Multiplexers M7 geführt. Die Leitung TB2 ist an den Eingang mit der Wertigkeit 2 des Multiplexers M6 und zu der leitungsseitigen Datenausgabeleitung LDOUT geführt. Die Leitung TB3 schließlich ist an den Eingang mit der Wertigkeit 3 des Multiplexers M6, an den Eingang mit der Wertigkeit 1 des Multiplexers M7 und zur leitungsseitigen Datenausgabeleitung LDOUT geführt.

Die Multiplexer M6 und M7 werden über die Leitungen TSPO und TSP1 gesteuert. Die Leitung TSPO ist mit einem niederwertigen und die Leitung TSP1 mit einem höherwertigen Steuereingang des Multiplexers M6 verbunden. Die Leitung TSP1 ist außerdem mit einem einzelnen Steuereingang des Multiplexers M7 verbunden.

Die auf die Leitungen TSP1 und TSP2 gebbaren Signalkombinationen TSP1 =0 und TSPO=0, TSP1 = 0 und TSPO = und TSPO = 0 und TSP1 = 1 und TSPO = 1 schalten in der angegebenen Reihenfolge die Eingänge 0, 1, 2 und 3 der Multiplexer M6 und M7 durch. Gleiches gilt übrigens auch später für die Leitungen RSP1 und RSP2 sowie die Multiplexer M3, M4 und M5.

Die Leitung TB3 ist als Einzelleitung 3 und die Leitung TB2 ist als Einzelleitung 2 in die leitungsseitige Datenausgabeleitung LDOUT einbezogen. Daneben ist die Ausgangsleitung des Multiplexers M7 als Einzelleitung 1 und die Ausgangsleitung des Multiplexers M6 als Ausgangsleitung 0 in die leitungsseitige Datenausgangsleitung LDOUT einbezogen.

Weist die Leitungsseite einen 1-Byte-breiten Datenpfad auf, ist nur die Einzelleitung 0 angeschlossen. Bei einem 2-Byte-breiten Datenpfad sind die Einzelleitungen 0 und 1 und bei einem 4-Byte-breiten Datenpfad sind alle Einzelleitungen angeschlossen.

Je nach dem, welche Datenpfadbreite die Leitungsseite aufweist, werden die Signale der Leitungen TBO, TB1, TB2 und TB3 in folgender Weise auf die angeschlossenen Einzelleitungen der Datenausgabeleitung LDOUT gegeben: Bei einem 1-Byte-breiten Datenpfad werden die Signale der Leitungen TBO, TB1, TB2 und TB3 in Abhängigkeit von den auf die Leitungen TSP1 und TSPO nacheinander geschalteten Signalkombinationen TSP1 = und TSPO=0, TSP1 = und TSP0=1 TSP1 =1 und TSPO = 0 und TSP1 =1 und TSPO = 1 nacheinander auf die Einzelleitung 0 gegeben; bei einem 2-Byte-breiten Datenpfad werden die Signale der Leitungspaare TBO, TB1 und TB2, TB3 in Abhängigkeit von den auf die Leitungen TSP1 und TSPO geschalteten Signalkombinationen TSP1 =0, TSPO = 0 und TSP1 = 1, TSPO = 0 nacheinander auf das Einzelleitungspaar 0,1 gegeben; und schließlich werden bei einem 4-Byte-breiten Datenpfad die Signale der Leitungen TBO, TB1, TB2 und TB3 in Abhängigkeit von der auf die Leitungen TSP1 und TSPO geschalteten Signalkombination TSP1 =0 und TSP0=0 einzeln aber gleichzeitig auf die Einzelleitungen 0, 1, 2 und 3 gegeben.

Für den Datenaustausch in Richtung Speicherseite weist die Datenbreitenanpaßeinrichtung BS2 eine ähnliche Schaltung wie für den Datenaustausch in Richtung Leitungsseite auf. Die betreffende Schaltung besteht gemäß dem Ausführungsbeispiel aus drei Multiplexern M3, M4 und M5, die über die Leitungen RSP1 und RSPO gesteuert werden. Die Leitung RSPO ist auf je einen niederwertigen Steuereingang der Multiplexer M3 und M5 geschaltet. Die Leitung RSP1 ist auf einen höherwertigen Steuereingang des Multiplexers M3 und auf einen einzelnen Steuereingang des Multiplexers M4 geschaltet.

Die Beschaltung der Eingänge der Multiplexer M3, M4 und M5 ist derart, daß je ein Eingang 0 der Multiplexer M3, M4 und M5 mit einer Einzelleitung 0 der leitungsseitigen Dateneingabeleitung LDIN verbunden ist. Daneben ist je ein Eingang 1 der Multiplexer M3 und M5 mit einer Einzelleitung 1 der leitungsseitigen Dateneingabeleitung LDIN verbunden. Der Eingang 1 des Multiplexers M4 ist mit einer Einzelleitung 2 der leitungsseitigen Dateneingabeleitung LDIN verbunden. Ein Eingang 2 des Multiplexers M3 ist nicht beschaltet bzw. entsprechend geerdet. Schließlich ist ein Eingang 3 des Multiplexers M3 mit einer Einzelleitung 3 der Dateneingabeleitung LDIN verbunden.

Für die Beschaltung der Einzelleitungen 0, 1, 2 und 3 der leitungsseitigen Dateneingabeleitung LDIN bei den verschiedenen Datenpfadbreiten der Leitungsseite gilt gleiches wie bei der Beschaltung der Einzelleitungen 0, 1, 2 und 3 der leitungsseitigen Datenausgabeleitung LDOUT.

Die Multiplexer M3, M4 und M5 sowie die Einzelleitung 0 schalten in Abhängigkeit von der auf den Leitungen RSP1 und RSPO im Augenblick vorherrschenden Signalkombination RSP1 =0 und RSPO = die Signale der Einzelleitung 0 gleichzeitig auf die Leitungen RB3, RB2, RB1 und RBO, wenn der Datenpfad der Leitungsseite 1-Byte-breit ist. Ist der Datenpfad der Leitungsseite 2-Byptebreit, werden in Abhängigkeit von der auf den Leitungen RSP1 und RSPO im Augenblick vorherrschenden Signalkombination RSP1 = 0 und RSPO = die Signale des beschalteten Einzelleitungspaares 0, 1 parallel auf die Leitungspaare RBO, RB1 und RB2, RB3 geschaltet. Beträgt die Datenpfadbreite der Leitungsseite vier Bytes, werden in Abhängigkeit von der auf den Leitungen RSP1 und RSPO im Augenblick vorherrschenden Signalkombination RSP1 = und RSPO = die Signale der Einzelleitungen 3, 2, 1 und 0 in gleicher Reihenfolge einzeln auf die Leitungen RB3, RB2, RB1 und RBO geschaltet.

Nachfolgend wird ein Verfahrensablauf für einen Datenaustausch zwischen der Speicherseite und der Leitungsseite näher beschrieben. Der Datenaustausch wird durch einen übergeordneten Prozessor und eine entsprechende Software vorbereitet. Hierzu wird eine Arbeitsanweisung für einen vorgegebenen Datenkanal, bestehend beispielsweise aus einem Linkpointer, einem Datenpointer und einem Bytecount, im Datenspeicher hinterlegt. Dann wird der Datenaustausch für diesen Datenkanal gestartet, indem ein auf die Arbeitsanweisung zeigender Pointer in den Statusspeicher speicher SST der Speicherseite eingetragen wird. Gleichzeitig wird in der Quittungseinrichtung ein Merker gesetzt.

Die Abarbeitung der Arbeitsanweisung durch das Speichersteuerwerk SS erfolgt in Zeitscheiben, was einem Datenaustauschvorgang, wie früher bezeichnet, entspricht. Die Abarbeitung einer Arbeitsanweisung stellt dann einen Gesamtvorgang dar.

Zu Beginn einer Zeitscheibe holt sich das Speichersteuerwerk SS den Status für den aktuellen Datenkanal aus seinem Statusspeicher SST. Am Ende der Zeitscheibe hinterlegt das Speichersteuerwerk SS den Beginnstatus für die nächste Zeitscheibe des gerade bearbeiteten Datenkanals im Statusspeicher SST.

Sobald die Kanalauswahlschaltung SNK der Speicherseite SS die entsprechende Kanalnummer freigegeben hat, lädt das Speichersteuerwerk SS die Arbeitsanweisung aus dem Datenspeicher in seinen Statusspeicher SST. Damit ist die Befehlsholphase beende und die erste Zeitscheibe abgelaufen.

In der zweiten Zeitscheibe für den betreffenden Datenkanal beginnt mit dem Laden des Adreßcounters und des Bytecounters die Datenphase. In einem Datenstoßbetrieb, in dem jeweils beispielsweise ein maximal 32-Byte-langer Datenstoß auf einmal abgearbeitet wird, wird der für den Datenaustausch in Richtung Leitungsseite zuständige Teil des Wechselpuffers WST, WSR, nämlich der mit WST bezeichnete Teil, mit Daten gefüllt. Dabei wird mit einem Takt ein Doppelwort, das sind vier Bytes, übertragen, die Datenspeicheradresse erhöht und der Bytecount erniedrigt. Am Ende der Bearbeitung eines Datenstoßes werden die aktuellen Werte von Adresse und Bytecount im Statusspeicher SST abgelegt. Als Information für das Leitungssteuerwerk LS werden beispielsweise die niederwertigeren zwei Bits der Startadresse des Datenbereichs und die Anzahl der Bytes im Wechselpuffer WST, WSR in die Steuerinformationsübergabeschaltung SI eingetragen. Über die Quittungssignalübergabeschaltung QS wird dem Leitungssteuerwerk LS mitgeteilt, daß der Wechselpuffer WST, WSR für den Datenaustausch in Richtung Leitungsseite gefüllt ist und daß dessen Entleerung beginnen kann.

Damit ist die zweite Zeitscheibe abgeschlossen. In der dritten und in den weiteren Zeitscheiben wird in gleicher Weise der Wechselspuffer WST, WSR wieder gefüllt. Vor dem Füllen des Wechselpuffers WST, WSR prüft das Speichersteuerwerk SS, ob der entsprechende Wechselpuffer WST, WSR schon geleert wurde. Ist das nicht der Fall, wird die aktuelle Zeitscheibe vorzeitig beendet.

Die Datenphase wird solange fortgesetzt, bis der Bytecount heruntergezählt ist.

Die Abläufe für die Kanalauswahl, Zeitscheibenzuteilung und die Versorgung des Steuerwerks mit dem aktuellen Status funktionieren auf der Leitungsseite in entsprechender Weise wie auf der Speicherseite. Beide Seiten können zeitlich völlig unabhängig voneinander arbeiten.

Sobald ein Datenkanal auf der Leitungsseite seine Zeitscheibe zugeteilt erhält, beginnt das Leitungssteuerwerk LS mit der Übertragung von Daten aus dem Wechselpuffer WSR, WST zur Leitungsseite hin.

Die Regulierung der Datenaustauschgeschwindigkeit erfolgt durch Leitungsanforderungs- und Leitungsbestätigungssignale über die Verbindungen V16 und V17.

Eine eventuelle Ausrichtung der Daten erfolgt über die schon beschriebene Datenschrägleseeinrichtung BS1. Die Datenpfadbreitenanpaßeinrichtung BS2 ermöglicht die Umsetzung der Datenbreite von z.B. 2 auf 4 Bytes. Die Umsetzung wird gemäß dem Ausführungsbeispiel vom Leitungssteuerwerk LS gesteuert.

Die Abläufe bei einem Datenaustausch zwischen der Leitungs- und der Speicherseite entsprechen denen des Datenaustausches zwischen der Speicher- und der Leitungsseite lediglich mit umgekehrter Datenflußrichtung. Eine Ausrichtung der Daten ist hier nicht erforderlich, da die Software den Beginn eines Empfangsdatenblocks im Datenspeicher an eine entsprechend ausgerichtete Stelle legen kann.

Dagegen ist es bei einigen Übertragungsvorgängen erforderlich, das Ende einer Nachricht an vorgegebenen Trennzeichen zu erkennen, die Nachricht zu trennen, auf verschiedene Speicherbereiche im Datenspeicher zu verteilen und die Trennzeichen zu entfernen. Dies kann von beiden Steuerwerken mit Hilfe der Vergleichseinrichtung COMP durchgeführt werden.

## Patentansprüche

1. Verfahren für einen zwischen einer Speicher-und einer Leitungsseite stattfindenden Datenaustausch durch direkte Speicherzugriffsübertragung, wobei der Datenaustausch aufeinanderfolgende einzelne Datenaustauschvorgänge umfaßt, die einem oder mehreren eigenständigen Gesamtvorgängen zugeordnet sind, dadurch gekennzeichnet, daß der Datenaustausch auf jeder der beiden Seiten für sich gesteuert und die Verbindung zwischen den beiden Seiten unter Berücksichtigung eines Quittungsbetriebes zwischen den beiden Seiten über eine Zwischenspeicherung der zu übertragenden Daten durch die Steuerung der jeweiligen einen Seite mit Auslesen der zwischengespeicherten Daten durch die Steuerung der jeweiligen anderen Seite hergestellt wird und daß auf jeder der beiden Seiten nach einem Ende eines zu einem Gesamtvorgang gehörenden Datenaustauschvorganges eine zu dem jeweiligen Gesamtvorgang gehörende aktuelle Statusinformation aufbewahrt und bei der Weiterführung an fortsetzungsrichtiger Stelle des betreffenden Gesamtvorganges wieder verwendet wird.

2. Verfahren nach Anspruch 1,
dadurch gekennzeichnet, daß die Abarbeitung von zu verschiedenen Gesamtvorgängen gehörenden Datenaustauschvorgängen entweder nach einem wahlfreien oder nach einem festen Ablaufschema erfolgt.

3. Verfahren nach Anspruch 1 oder 2,
dadurch gekennzeichnet, daß die Datenaustauschvorgänge wenigstens teilweise im Datenstoßbetrieb erfolgen.

4. Verfahren nach einem der vorherigen Ansprüche,
dadurch gekennzeichnet, daß bei gegenüber vorgegebenen Datenbeginngrenzen unausgerichteten Daten unmittelbar mit dem Datenaustauschvorgang eine Ausrichtung der Daten auf die Datenbeginngrenze erfolgt.

5. Verfahren nach einem der vorherigen Ansprüche,
dadurch gekennzeichnet, daß bei unterschiedlichen Datenpfadbreiten zwischen der Leitungs- und der Speicherseite unmittelbar mit dem Datenaustauschvorgang eine Anpassung der Datenbreite der zu übertragenden Daten an die jeweils vorherrschende Datenpfadbreite erfolgt.

6. Schaltungsanordnung für einen zwischen einer Speicher- und einer Leitungsseite stattfindenden Datenaustausch durch direkte Speicherzugriffsübertragung, wobei der Datenaustausch aufeinanderfolgende einzelne Datenaustauschvorgänge umfaßt, die einem oder mehreren eigenständigen Gesamtvorgängen zugeordnet sind, gekennzeichnet durch zwei jeweils einen Statusspeicher (LST, SST) aufweisende Steuereinheiten (LS, SS), die jeweils einer der beiden Seiten zugeordnet sind, einer Quittungseinrichtung, die zwischen den beiden Steuereinheiten (LS, SS) angeordnet ist und für jeweils eine der beiden Seiten eine Kanalauswahlschaltung (LNK, SNK) sowie eine Quittungssignalübergabe- (QS) und eine Steuerinformationsübergabeschaltung (SI) aufweist, und einem Wechselspeicher (WST, WSR), mit dem beide Steuereinheiten (LS, SS) verbunden sind.

7. Schaltungsanordnung nach Anspruch 6,
dadurch gekennzeichnet, daß von den beiden Steuereinheiten (LS, SS) wenigstens die der Speicherseite zugeordnete Steuereinheit (SS) eine Zähleinrichtung (BZ, AZ) für die Abarbeitung eines Datenstoßes bei einem Datenaustauschvorgang aufweist.

8. Schaltungsanordnung nach Anspruch 6 oder 7, dadurch gekennzeichnet, daß wenigstens zwischen einem der beiden Steuereinheiten (LS, SS) und dem Wechselspeicher (WST, WSR) eine Datenschrägleseeinrichtung (BS1) angeordnet ist.

9. Schaltungsanordnung nach einem der Ansprüche 6 bis 8,
dadurch gekennzeichnet, daß wenigstens auf einer der beiden Seiten eine Datenbreitenanpaßeinrichtung (BS2) vorgesehen ist.

10. Schaltungsanordnung nach einem der Ansprüche 6 bis 9,
dadurch gekennzeichnet, daß wenigstens auf der Leitungsseite eine Datenvergleichseinrichtung (COMP) vorgesehen ist.
